# EUROPEAN PATENT APPLICATION

(11) **EP 1 536 547 A1**
(43) Date of publication of application: **01.06.2005**
(21) Application number: 03027208.2
(22) Date of filing: 27.11.2003
(51) Int. Cl.: H02K 49/10

(54) **Magnetic clutch comprising slippage control means**

(71) Applicant: DESMI A/S, 9400 Norresundby (DK)
(72) Inventor: Roldgaard, Dan, 5270 Odense N (DK)
(74) Representative: Tellefsen, Jens J.

(57) **Abstract**

The invention discloses a magnetic clutch (8) connecting the driving shaft (12) of a driving means (6) and a driven shaft (16) on a load (4), which is protected against heat-damage on its oppositely polarised magnetic clutch members (14), (18) in case of the occurrence of relative rotational slippage between the clutch members. This is achieved by recording the nummeric value of the difference in number of rotation between the first driving shaft (12) and the second driven shaft (16) in a control unit (20), where said second control unit (20) is in communication with a first control unit (10), controlling the driving means (6), where and said second control unit (20) being adapted to shut down the driving means (6) via the first control unit (10), in case said recorded nummeric value exceeds a predetermined value.

## Description

The present invention relates to an apparatus for driving a load comprising driving means connected by a magnetic clutch to said load, and comprising a first control unit connected with driving means comprising at least a first driving shaft with a first magnetic clutch member and a second driven shaft with a second magnetic clutch member, where the first and second magnetic clutch members are oppositely magnetically polarised, and where the magnetic attraction provides for transmittal of torque.

Such devices are well known and are frequently used when connecting e.g. pumps with electrically powered driving units such as electric motors, where the pumps are used for the transport of high viscosity fluids. In some situations when pumping high viscosity fluids, the load on the pump or more specifically the torque between the pump shaft and the shaft on the electric motor might exceed the maximum allowed load for the electric motor, which might damage it. To avoid damages as a result of overload, the above-mentioned magnetic clutch between the driving shaft of the electric motor and the driving shaft of the pump is frequently used. The force of the magnetic attraction between the driving shaft and the second driven shaft is adapted an adequate torque for the electric motor.

In case the torque transmitted between the driving shaft and the second driven shaft overcomes the force of said magnetic attraction, a relative rotational slippage between the first driving shaft and the second driven shaft will occur. This situation might be caused by the fact that the fluid which is to be pumped has not been sufficiently preheated to its melting point or to the desired viscosity which will cause a setting of the rotational parts in the pump. The rotational slippage will, however, cause very high temperatures inside the magnet which rotational slippage, thereby, looses its magnetism. As the used magnets in magnetic clutches represent a large share of the value of a pump, it will be of great importance to eliminate the occurrence of such damages.

It is the object of the invention to provide an apparatus of the art equipped in such a way that heat damages to the magnets in the magnetic clutch in connection with the rotational slippage between the first driving shaft and the second driven shaft will be eliminated.

This object is achieved by an apparatus according to the pre-ample of claim 1 and is characterised in that the first driving shaft is connected to a first counter and the second driven shaft is connected to a second counter for recording the number of rotation of said shafts, said first and second counters being connected with a second control unit recording the numeric value of the difference in the number of rotation between the first driving shaft and the second driven shaft, where said second control unit (20) is in communication with the first control unit, and said second control unit being adapted to shut down the driving means via the first control unit, in case said recorded numeric value exceeds a predetermined value.

It is hereby achieved, that the occurrence of rotational slippage between the first driving shaft and the second driven shaft, when the torque transmitted there between overcomes the force of magnetic attraction between the first and the second clutch members will not exceed a predetermined extend since the driving means for driving the first driving shaft will be shut down before the temperature of the magnets in the magnetic clutch between the driving shaft and the driven shaft rises to a damaging temperature level caused by the magnetic slippage.

In a preferred embodiment of the invention, the first counter and the second counter are connected to a first reed-contact and a second reed-contact respectively, sending at least one pulse per rotation of the driving shaft and the driven shaft, respectively, to the second control means, where the second control means comprises an electronic circuit adapted to count the pulses received from said first and second reed-contact with different signs, so that a pulse received from the first reed-contact will be counted down by receiving a pulse from said second reed-contact.

The numeric value of the difference in the number of rotation between the first driving shaft and the second driven shaft is, hereby, determined in a very simple manner.

It is preferred that the first reed-contact communicates with at least one magnet on the first driving shaft, and the second reed-contact communicates with at least one magnet on the second driven shaft.

Hereby, it is achieved that each time the magnet on the first driving shaft passes the reed-contact, the reed-contact will send a pulse to the counter to the second control means to an electronic circuit which counts the pulse e.g. with a positive sign and receiving a pulse from the second reed-contact with a negative sign, will count down the value received in the counter received from the first reed-contact. The resulting value in the electronic circuit should thus be zero indicating that rotational slippage between the first driving shaft and the second driving shaft is not occurring. However, if the electronic circuit counting the pulses received from the first and the second reed-contacts exceed the predetermined value, the second control unit is adapted to shut down the driving means for the driving shaft e.g. by sending a stop signal to the first control unit.

In practice, said stop signal could be sent from the second control unit to the first control unit and the recorded numeric value in the counter is greater than one, whereby e.g. the pump will be shut down. With this system the relative rotational slippage between the first driving shaft and the second driven shaft on the pump will occur during two rotations of said shaft which will not normally damage the magnets.

The apparatus according to the invention is especially suited for the use of an electric motor as driving means, and furthermore, it is frequently preferred that the electric motor is supplied with power through a frequency converting means, said frequency converting means being in communication with the second control unit for shutting off the frequency converting means and, thereby, stopping the electric motor, in case said recorded numeric value exceeds a predetermined value.

Thus, it should be understood that the frequency converting means also comprises the first control unit connected with the driving means which in this case is said electric motor.

The load in connection with the apparatus according to the invention might consist of a pump in particular a pump for transporting high viscosity fluids such as pitch (tar) stearin or the like.

To achieve a good magnetic attraction between the first driving shaft and the second driven shaft, said shaft can advantageously be located in such a way that they are abutting and are axially aligned, and moreover, that the first magnetic clutch member and the second magnetic clutch member each consists of concentric rings of magnetic material, and where the concentric rings are oppositely polarised.

The invention will be disclosed in further detail referring to the embodiments disclosed in the drawings wherein,
- fig. 1: is a diagrammic disclosure of an embodiment of the apparatus according to the invention, and
- fig. 2: is a detailed sectional view of a magnetic clutch according to the invention wherein the load is in the form of a pump.

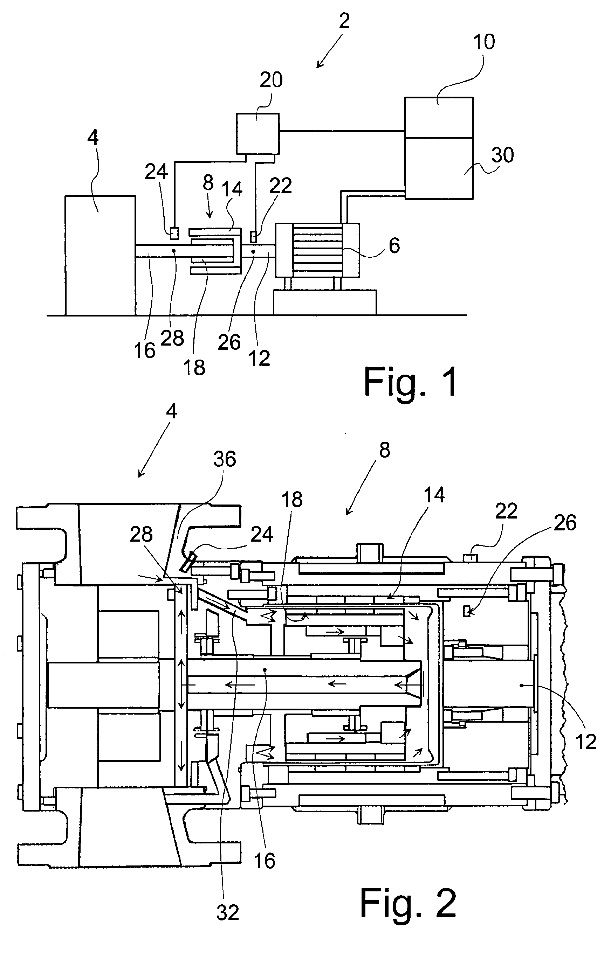

In fig 1 is in diagrammical manner indicated an apparatus 2 driving a load 4. The apparatus comprises driving means 6, which in the shown embodiment consists of an electrically powered motor connected with a first control unit. The driving means is connected to the load by a magnetic clutch 8. The electric motor comprises a driving shaft 12 with a first magnetic clutch member 14. The load 4 comprises a second driven shaft 16 with a second magnetic clutch member 18. The first and the second magnetic clutch members 14,18 are oppositely magnetically polarised. The magnetic attraction between the two magnetic clutch members 14,18 arranged on respective shafts 12,16 will under normal process conditions transfer the torque created by the motor means 6 to the load 4.

When the load 4 is increased above the pre-designed load maximum, this provides for a relative rotational slippage between the first driving shaft 12 and the second driven shaft when the torque there between overcomes the force of the magnetic attraction.

As it appears in fig. 1, a reed-contact 22 is located near the driving shaft 12 which reed-contact 22 is communicating with one or more magnets 26 located on the driving shaft. Near the driven shaft 16 of the load 4, a second reed-contact 24 is located which is communicating with a magnet 28 located on the driven shaft 16. The first reed-contact 22 and the second reed-contact 24 are connected respectively to a first counter and a second counter (not shown) in a second control unit 20. Said second control unit comprising an electronic circuit adapted to count the pulses received from said first and said second reed-contacts 22, 24. The pulses have different signs i.e. plus or minus such that a pulse received from the first reed-contact 22 will be equalised by receiving a pulse from the second reed-contact 24. The second control unit is recording the numeric value of the difference in the number of rotations between the first driving shaft 12 and the second driven shaft 16.

As described, the second control unit 20 and the first control unit are in communication, and said first control unit controls the electric supply to the electric motor 6. The second control unit is adapted to shut down the power supply to the electric motor by sending a stop signal to the first control unit 10 in case the recorded numeric value of the difference in the number of rotations between the first driving shaft 12 and the second driven shaft 16 exceeds a predetermined value.

The first control unit 10 is adapted to receive such a signal, and having received such a signal, the first control unit is adapted to shut down the power supply 30 to the electric motor 6.

It is preferred that the numeric value of the difference in the number of rotation between the first driving shaft 12 and the second driven shaft 16 does not exceed one. This means that the driving shaft 12 at most will make two rotations performing a relative rotational slippage in the magnetic clutch 8, which normally will not damage the magnets 14,18 in the magnetic clutch 8 before the electric motor is shut down.

The electric motor 6 could be supplied with power so a frequency converting means 30 is in communication with the second control unit 20 as indicated in fig. 1.

In fig. 2, which is a detailed sectional view of an embodiment of a magnetic clutch according to the invention, the driving shaft 12 and the second driven shaft 16 are abutting and are axially aligned. The load 4 is in this embodiment a pump, comprising the driven shaft 16, which is in connection with the driving shaft 12, said shafts being aligned and abutting each other. The shafts 12, 16 are connected via a magnetic clutch 8, comprising a first and a second clutch members 14,18 each consisting of concentric rings of magnetic material, being oppositely magnetically polarised, and where the magnetic attraction provides for the transferral of torque from the motor means to the pump. Under overload conditions in the pump, a relative rotational slippage between the first driving shaft 12 and the driven shaft 16 may occur when the torque between the two clutch members 14,18 overcomes the force of the magnetic attraction between the first- and the second clutch member 14, 18.

Fig. 2 further discloses the location of the first reed-contact 22 located on the housing 34 of the driving shaft 12, communicating with the first magnet 26 disposed on the driving shaft 12, and the second reed-contact 24 located on the pump casing 36, communicating with the second magnet 28 disposed on the driven shaft 16. The reed-contacts 22, 24 are in communicating connection with the second control unit (not shown in fig. 2).

A further feature of this embodiment is that the driven shaft 16 comprises channels 32 which is in connection with the suction side and the pressure side of the pump 4, providing for cooling the magnetic clutch 8 by leading some of the transported fluid from the pump through the second driven shaft 16 and, thereby, performing a cooling of the magnetic clutch and the bearings of the pump shaft.

## Claims

1. An apparatus (2) for driving a load (4) comprising driving means (6) connected by a magnetic clutch (8) to said load (4), and comprising a first control unit (10) connected with the driving means (6) comprising at least a first driving shaft (12) with a first magnetic clutch member (14) and a second driven shaft (16) with a second magnetic clutch member (18) on the load (4), where the first and the second magnetic clutch members (14, 18) are oppositely magnetically polarised, and where the magnetic attraction provides for transmittal of torque between the first driving shaft (12) and the second driven shaft (16), **characterised in that** the first driving shaft (12) is connected to a first counter and the second driven shaft (16) is connected to a second counter where the first and second counters are provided for recording the number of rotations of said shafts (12, 16), said first and second counters being connected with a second control unit (20) recording the numeric value of the number of rotations between the first driving shaft (12) and the second driven shaft (16), where said second control unit (20) is in communication with the first control unit (10), and said second control unit (20) being adapted to shut down the driving means (6) via the first control unit(10), in case said recorded numeric value exceeds a predetermined value.

2. Apparatus according to claim 1, **characterised in that** the first counter and the second counter are connected to a first reed-contact (22) and a second reed-contact (24) respectively, sending at least one pulse pr. rotation of the driving shaft (12) and the driven shaft (16) respectively to the second control means (20), where the second control means comprises an electronic circuit adapted to count the pulses received from said first and second reed-contacts (22, 24) with different signs, so that a pulse received from the first reed-contact (22) will be counted down by receiving a pulse from said second reed-contact (24).

3. Apparatus according to claim 2, **characterised in that** the first reed-contact (22) communicates with at least one magnet (26) on the first driving shaft (12), and the second reed-contact (24) communicates with at least one magnet (28) on the second driven shaft (16).

4. Apparatus according to any of the claims 1-3, **characterised in that** the driving means (6) consists of an electric motor.

5. Apparatus according to claim 4, **characterised in that** the electric motor (6) is supplied with power through frequency converting means (30), said frequency converting means (30) being in communication with the second control unit (20) for shutting off the frequency converting means (30) via the first control unit (10) and, thereby, stopping the electric motor (6) in case said recorded numeric value exceeds a predetermined value.

6. Apparatus according to claim 4 or 5, **characterised in that** the load (4) consists of a pump, in particular a pump for transportation of high viscosity fluids.

7. Apparatus according to any of the claims 1-7, **characterised in that** the first driving shaft (12) and the second driven shaft (16) are abutting and are axially aligned, and that the first magnetic clutch member (14) and the second magnetic clutch (18) member each consists of concentric rings of magnetic material, and where the concentric rings are oppositely magnetically polarised.
